# EUROPEAN PATENT APPLICATION

(11) **EP 3 952 262 A1**
(43) Date of publication of application: **09.02.2022**
(21) Application number: 20798402.2
(22) Date of filing: 13.04.2020
(51) Int. Cl.: H04M 1/02, H04N 5/225

(54) **ELECTRONIC DEVICE COMPRISING ROTATING CAMERA**

(30) Priority: 30.04.2019 KR 20190050767
(71) Applicant: Samsung Electronics Co., Ltd., Suwon-si, Gyeonggi-do 16677 (KR)
(72) Inventor: CHUNG, Haein, Suwon-si, Gyeonggi-do 16677 (KR); KIM, Kangsik, Suwon-si, Gyeonggi-do 16677 (KR); KOO, Kyungha, Suwon-si, Gyeonggi-do 16677 (KR)
(74) Representative: Gulde & Partner
(86) International application number: PCT/KR2020/004971
(87) International publication number: WO 2020/222442

(57) **Abstract**

According to an embodiment of the present invention, disclosed is an electronic device comprising: a housing; a sliding unit configured to slide with regard to the housing, the sliding unit comprising an opening exposed outwards along a first direction; a display facing in a second direction, the display being exposed through a part of the housing; and a camera module unit disposed in the opening so as to rotate inside the opening, rotations of the camera module unit being interlinked with operations of the sliding unit. The sliding unit comprises: a first state in which the camera module unit is positioned to overlap the display; a second state in which same moves, by means of a first stroke, from the first state by a first length along a third direction perpendicular to the first direction and the second direction; a third state in which same moves, by means of a second stroke, from the second state by a second length in the same direction as the first stroke; and a fourth state in which same moves, by means of a third stroke, from the third state by a third length in the same direction. The camera module unit is configured to: face the first direction in the first state and the second state; face the second direction in the third state and the fourth state; rotate from the first direction toward the second direction by means of the second stroke when switching from the second state to the third state; and make contact between the inner surface of the opening and the camera module unit by means of the third stroke when switching from the third state to the fourth state. In addition, various other embodiments are possible.

## Description

### [Technical Field]

Various embodiments of the disclosure relate to an electronic device including a rotating camera.

### [Background Art]

Recent electronic devices perform a function as an image photographing device as well as a communication function.

With the rapid development of a hardware performance, a performance of a camera module built into an electronic device is also rapidly developing, and the camera module may capture an image or video with a high resolution as high as that of a professional image photographing device.

Such a high performance camera module may generate a heat in an operation process, and appropriate heat dissipation may be required to secure operation reliability of the camera module.

### [Disclosure of Invention]

### [Technical Problem]

An electronic device according to various embodiments of the disclosure may utilize one camera module unit as a front camera and a rear camera.

An electronic device according to various embodiments of the disclosure may increase a contact area between a camera module unit and an electronic device to expand a radiation path of a heat generating in an operation process of a camera module.

### [Solution to Problem]

According to an embodiment of the disclosure, an electronic device includes a housing; a slide part including an opening exposed to the outside in a first direction and sliding with respect to the housing; a display facing in a second direction and exposed through a portion of the housing; and a camera module unit disposed in the opening, rotating within the opening, and rotating in association with the operation of the slide part, wherein the slide part includes a first state in which the camera module unit is positioned to overlap the display; a second state that moves by a first length in a third direction perpendicular to the first direction and the second direction by a first stroke in the first state; a third state that moves by a second length in the same direction as that of the first stroke by a second stroke in the second state; and a fourth state that moves by a third length in the same direction by a third stroke in the third state, and wherein the camera module unit faces in the first direction in the first state and the second state, faces in the second direction in the third state and the fourth state, rotates from the first direction toward the second direction by the second stroke upon switching from the second state to the third state, and is set so that the camera module unit contacts an inner surface of the opening by the third stroke upon switching from the third state to the fourth state.

According to an embodiment of the disclosure, a method of operating an electronic device including a housing, an opening formed in the first direction, a display facing in a second direction, a slide part sliding with respect to the housing, and a camera module unit disposed in the opening and rotating in association with an operation of the slide part in the opening includes moving, by the slide part, by a first length in a third direction perpendicular to the first direction and the second direction by a first stroke in a state in which the camera module unit overlaps the display when a user input is received; moving by a second length in the same direction as that of the first stroke by a second stroke; and moving by a third length in the same direction as that of the second stroke by a third stroke, wherein the camera module unit contacts an inner surface of the opening by moving by the third length.

According to another embodiment of the disclosure, an electronic device includes a housing, an opening exposed to the outside in a first direction, a slide part sliding with respect to the housing, a display facing in a second direction, built into the housing, and exposed through a portion of the housing, a camera module unit disposed in the opening, rotating within the opening, and rotating in association with an operation of the slide part, and a thermal interface material (TIM) disposed in at least a portion of an inner circumferential surface of the opening of the slide part, wherein the slide part includes a first state in which the camera module unit is positioned to overlap the display, a second state moving by a first length in a third direction perpendicular to the first direction and the second direction by a first stroke in the first state, a third state moving by a second length in the same direction as that of the first stroke by a second stroke in the second state, and a fourth state moving by a third length in the same direction by a third stroke in the third state, wherein the camera module unit may be configured so that the camera module unit contacts an inner surface of the opening by the third stroke upon switching from the third state to the fourth state.

### [Advantageous Effects of Invention]

In an electronic device according to various embodiments of the disclosure, as one camera module unit functions as a front camera and a rear camera, it is possible to reduce a size limitation of a display due to mounting of the front camera.

In an electronic device according to various embodiments of the disclosure, after a camera module unit rotates, by removing the gap between the opening and the camera housing and making them come into direct contact, a radiation path of a heat generating in an operation process of a camera module can be expanded.

Further, effects obtainable or predicted by various embodiments of the disclosure will be disclosed directly or implicitly in the detailed description of the embodiments of the disclosure. For example, various effects predicted according to various embodiments of the disclosure will be disclosed in the detailed description to be described later.

### [Brief Description of Drawings]

FIG. 1 is a block diagram illustrating an electronic device in a network environment according to various embodiments.
FIG. 2A is an exploded perspective view illustrating an electronic device viewed from one side according to an embodiment of the disclosure.
FIG. 2B is an exploded perspective view illustrating an electronic device viewed from another side according to an embodiment of the disclosure.
FIG. 3 is a side view illustrating an upward moving operation of a camera module unit according to an embodiment of the disclosure.
FIG. 4 is a side view illustrating a downward moving operation of a camera module unit according to an embodiment of the disclosure.
FIGS. 5A to 5F are perspective views illustrating an upward moving operation of a camera module unit according to an embodiment of the disclosure.
FIGS. 6A to 6F are perspective views illustrating a downward moving operation of a camera module unit according to an embodiment of the disclosure.
FIG. 7A is a perspective view illustrating an example of a structure of a camera module unit according to an embodiment of the disclosure, and FIG. 7B is a diagram illustrating a heat transfer path of an electronic device according to an embodiment of the disclosure.
FIGS. 8A to 8C are diagrams illustrating a part of an upward moving operation of a camera module unit based on the operation relationship between a rotation cam and a push rod according to an embodiment of the disclosure.

### [Mode for the Invention]

Hereinafter, various embodiments of the disclosure will be described with reference to the accompanying drawings.

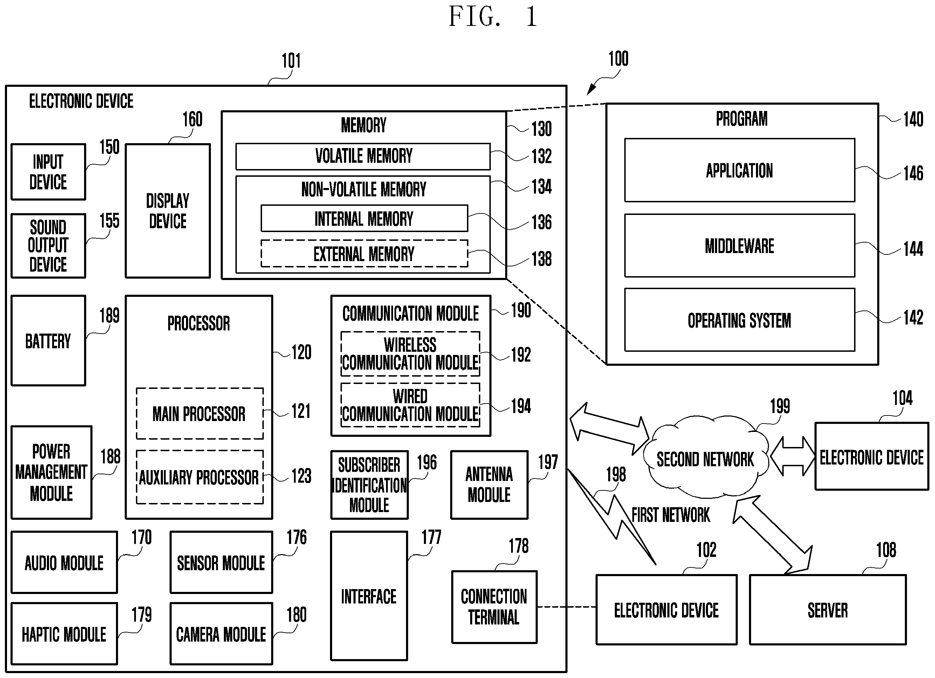

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module(SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., PCB). According to an embodiment, the antenna module 197 may include a plurality of antennas. In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or clientserver computing technology may be used, for example.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor(e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

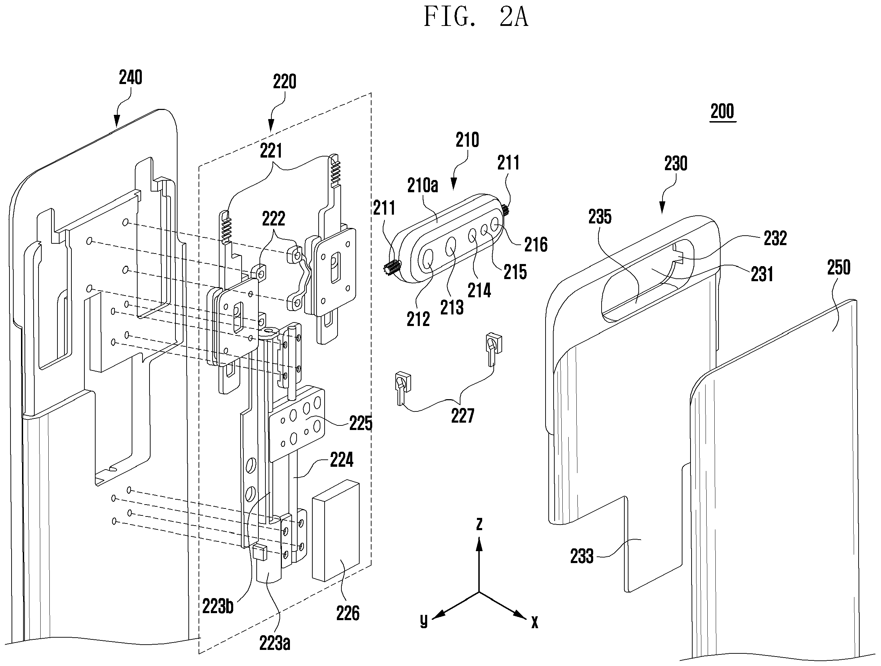

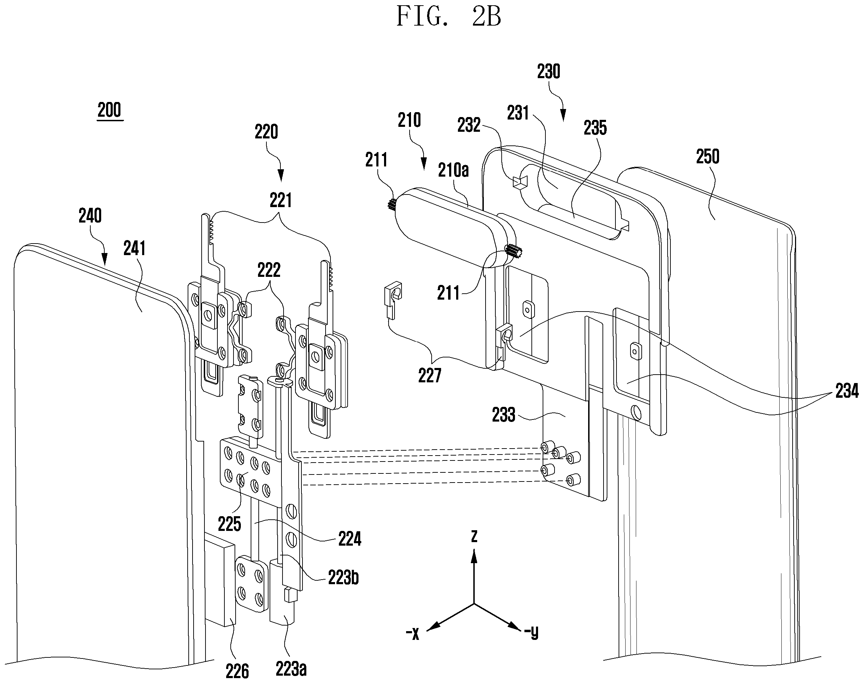

FIG. 2A is an exploded perspective view illustrating an electronic device viewed from one side according to an embodiment of the disclosure, and FIG. 2B is an exploded perspective view illustrating the electronic device viewed from the other side according to an embodiment of the disclosure.

In describing an electronic device according to various embodiments of the disclosure, the same or similar reference numerals may be used for the same or similar components. In describing an electronic device according to various embodiments of the disclosure, a front surface may mean a -x direction (e.g., second direction), a rear surface may mean an x direction (e.g., first direction), and a side surface may mean a y-direction (e.g., fifth direction or sixth direction).

Referring to FIGS. 2A and 2B, an electronic device 200 (e.g., the electronic device 101 of FIG. 1) according to an embodiment of the disclosure may include a camera module unit 210 (e.g., the camera module 180 of FIG. 1), a slide operation controller 220, a slide part 230, a screen unit 240 (e.g., the display device 160 of FIG. 1), and a rear cover 250. Further, one or more other components may be added to the electronic device 200 according to an embodiment.

The electronic device 200 according to an embodiment of the disclosure may include a housing including the camera module unit 210, the slide operation controller 220, the slide part 230, the screen unit 240, and the rear cover 250. The housing according to various embodiments of the disclosure may refer to a structure that forms an outer shape of the electronic device 200 and that protects internal components. Alternatively, the housing may include an internal structure of the electronic device 200.

The camera module unit 210 according to an embodiment of the disclosure may include at least one camera device 212, 213, or 216, a flash 214, or a sensor module 215. The camera module unit 210 according to an embodiment may include the camera module 180 of FIG. 1. At least one camera device 212, 213, or 216 may include one or more lenses, an image sensor, and/or an image signal processor. The flash 214 may include, for example, a light emitting diode or a xenon lamp. The sensor module 215 may generate an electrical signal or data value corresponding to an internal operating state or an external environmental state of the electronic device 200. The sensor module 215 may include, for example, a proximity sensor, an illuminance sensor, and a heart rate monitoring (HRM) sensor.

The electronic device 200 according to various embodiments of the disclosure may further include a sensor module (not illustrated), for example, at least one of a gesture sensor, a gyro sensor, an atmospheric sensor, a magnetic sensor, an acceleration sensor, a grip sensor, a color sensor, an infrared (IR) sensor, a biometric sensor, a temperature sensor, a humidity sensor, or a fingerprint sensor.

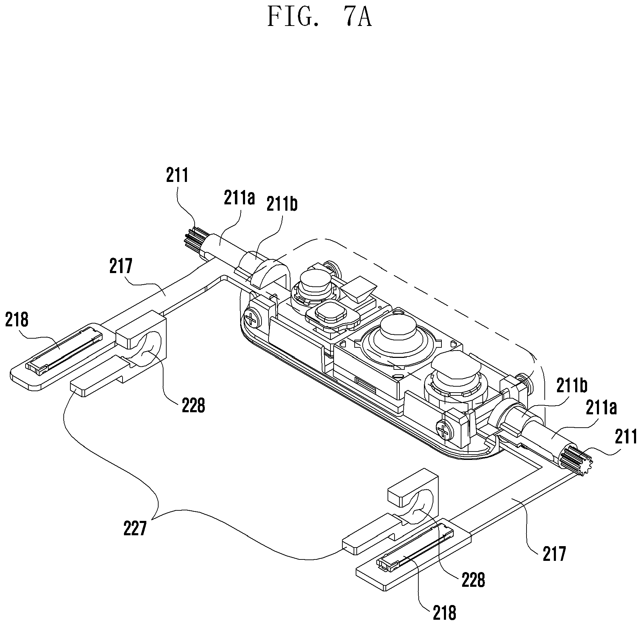

The camera module unit 210 according to an embodiment of the disclosure may include a camera housing 210a including the at least one camera device 212, 213, and 216, the flash 214, or the sensor module 215. The camera housing 210a may include a pinion gear 211 in at least one side surface thereof. For example, the pinion gear 211 may be symmetrically disposed at both side surfaces of the camera housing 210a. A rotation cam 211b (see FIG. 7A) may be disposed between the camera housing 210a and the pinion gear 211. The rotation cam 211b and the pinion gear 211 according to various embodiments of the disclosure may be integrally formed with the camera housing 210a.

The slide operation controller 220 according to an embodiment of the disclosure may include a rack gear 221, a cleek 222, a motor 223a, a rotation part 223b, a guide frame 224, a moving member 225, a control circuit 226, and a push rod 227. For example, the control circuit 226 may control the motor 223a according to a user input (e.g., front photographing switching input or front photographing basic app execution). The rotation part 223b may rotate according to an operation of the motor 223a, and the moving member 225 may move up and down according to a rotation of the rotation part 223b. The moving member 225 may be coupled to a portion (e.g., a moving member coupling part 233) of the slide part 230, and the slide part 230 may be moved according to a movement of the moving member 225. One side of the push rod 227 may be coupled to the slide part 230 to move together with the slide part 230. The push rod 227 may transfer a driving force generated by a rotation of the motor 223a to the camera module unit 210 so that the camera module unit 210 moves together with the slide part 230. The cleek 222, the motor 223a, and the guide frame 224 according to various embodiments of the disclosure may be coupled to a portion (e.g., a rear surface of the screen unit 240 or a rear surface of a display 241) of the housing.

The rack gear 221 according to an embodiment of the disclosure may move to correspond to a movement of the slide part 230. For example, after moving a first length, the rack gear 221 may be fixed by the cleek 222. After the rack gear 221 is fixed by the cleek 222, the slide part 230 may further move a second length to rotate the camera module unit 210. After moving the second length, the slide part 230 may further move a third length so that the camera housing 210a close contacts an inner surface of an opening 231 of the slide part 230. A thermal interface material (TIM) 235 may be disposed in the inner surface of the opening 231 to implement a high efficiency thermal connection state in the camera housing 210a and the inner surface of the opening 231.

The pinion gear 211 of the camera module unit 210 according to an embodiment of the disclosure may engage with the rack gear 221 of the slide operation controller 220. For example, while moving the first length, the rack gear 221, the camera module unit 210, and the slide part 230 may integrally vertically move (e.g., upward moving in a third direction or downward moving in a fourth direction in a z-axis). After the rack gear 221 is fixed by the cleek 222, while the camera module unit 210 moves a second length by a force transferred through the push rod 227, the pinion gear 211 may rotate on the rack gear 221, and the camera module unit 210 may rotate within the opening 231 of the slide part 230. After the camera module unit 210 rotates within the opening 231, the slide part 230 may further move a third length so that the inner surface of the opening 231 contacts the camera housing 210a of the camera module unit 210.

The pinion gear 211 according to various embodiments of the disclosure may rotate based on a length (or number of gears) of the rack gear 221. For example, an angle at which the pinion gear 211 rotates may vary according to the length (or number of gears) of the rack gear 221. Accordingly, according to the length (or number of gears) of the rack gear 221, the camera module unit 210 coupled to the pinion gear 211 may rotate by a predetermined angle. As an example, the length (or number of gears) of the rack gear 221 may be set so that the pinion gear 211 rotates 360 degrees. As one of various embodiments, the length (or number of gears) of the rack gear 221 may be set so that the pinion gear 211 rotates 0 degrees to 180 degrees. Alternatively, the length (or number of gears) of the rack gear 221 may be set so that the pinion gear 211 rotates by 180 degrees or more (e.g., 280 to 300 degrees). When the pinion gear 211 rotates by 180 degrees or more, the camera module unit 210 may be set to an angle appropriate for photographing without rotating the electronic device 200 itself.

The slide part 230 according to an embodiment of the disclosure may include an opening 231, a gear groove 232, a moving member coupling part 233, and a TIM 235. For example, the opening 231 may be formed in a portion of the slide part 230 (e.g., an upper end of the slide part 230 in a z direction). The opening 231 may be formed to correspond to a size of the camera module unit 210, and be formed with a predetermined gap in order to minimize friction when the camera module unit 210 rotates. The camera module unit 210 may be disposed in the opening 231. The camera module unit 210 may rotate within the opening 231 about the pinion gear 211 as an axis. The pinion gear 211 may be disposed in the gear groove 232. The pinion gear 211 may rotate within the gear groove 232. The moving member coupling part 233 may be coupled to the moving member 225. Accordingly, the slide part 230 may move according to a movement (e.g., vertical movement) of the moving member 225. The TIM 235 may be a material having higher thermal conductivity than that of air, and thermal conductivity between the camera housing 210a and the inner surface of the opening 231 may elevate by filling a fine gap between a contact surface of the opening 231 and the camera housing 210a.

The slide part 230 according to various embodiments of the disclosure may include a gear guide groove 234. For example, the rack gear 221 may be disposed to correspond to the gear guide groove 234. A moving radius of the rack gear 221 may be determined by the gear guide groove 234.

The screen unit 240 according to an embodiment of the disclosure may include a display 241. For example, the display 241 may be disposed adjacent to or coupled to a touch sensing circuit, a pressure sensor capable of measuring the intensity (pressure) of a touch, and/or a digitizer that detects a magnetic field type stylus pen. In some embodiments, at least a part of a sensor module (not illustrated) and/or at least a part of a key input device (not illustrated) may be disposed in a part of the display 241. Because a front camera is not disposed in the display 241 according to various embodiments of the disclosure, the display 241 may be implemented into a maximum area in a front surface of the electronic device 200.

The rear cover 250 according to an embodiment of the disclosure may cover a portion of the slide part 230. For example, the opening 231 may be formed in a portion (e.g., an upper end of the slide part 230 in a z direction) of the slide part 230 that is not covered by the rear cover 250. The slide part 230 may vertically move between the screen unit 240 and the rear cover 250. The rear cover 250 may be made of, for example, coated or tinted glass, ceramic, polymer, metal (e.g., aluminum, stainless steel (STS), or magnesium), or a combination of at least two of the above materials.

The electronic device 200 according to an embodiment of the disclosure may include an audio module (not illustrated). For example, the audio module may include a microphone hole and a speaker hole. In the microphone hole, a microphone for obtaining an external sound may be disposed therein, and in some embodiments, a plurality of microphones may be disposed to detect a direction of a sound. The speaker hole may include an external speaker hole and a receiver hole for a call. In some embodiments, the speaker hole and the microphone hole may be implemented as a single hole or a speaker may be formed without a speaker hole (e.g., piezo speaker).

The electronic device 200 according to an embodiment of the disclosure may include a key input device (not illustrated). For example, the key input device may include a home key button disposed at a front surface (e.g., the display 241) of the electronic device 200, a touch pad disposed around the home key button, and/or a side key button disposed at a side surface (e.g., side bezel) of the electronic device 200. In another embodiment, the electronic device 200 may not include some or all of the above-mentioned key input devices, and a key input device that is not included in the electronic device 200 may be implemented in other forms, such as a soft key, on the display 241.

The electronic device 200 according to an embodiment of the disclosure may include a connector hole (not illustrated). For example, the connector hole may include a first connector hole that may receive a connector (e.g., USB connector) for transferring and receiving power and/or data to and from an external electronic device, and/or a second connector hole (e.g., earphone jack) that may receive a connector for transferring and receiving an audio signal to and from an external electronic device.

The electronic device 200 according to an embodiment of the disclosure may include a printed circuit board (not illustrated) between the screen unit 240 and the rear cover 250. For example, the printed circuit board may be equipped with a processor (e.g., the control circuit 226), a memory, and/or an interface. The processor may include, for example, one or more of a central processer, an application processor, a graphic processer, an image signal processor, a sensor hub processor, or a communication processor.

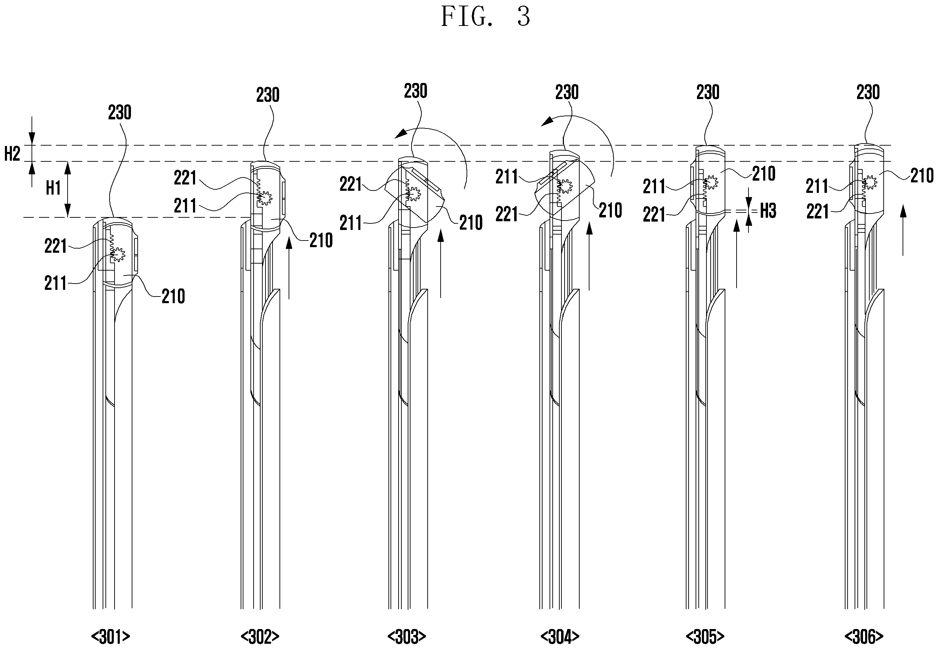

FIG. 3 is a side view illustrating an operation (e.g., movement in a z-direction of FIG. 2A) in which a camera module unit moves upward in a third direction according to an embodiment of the disclosure.

Referring to FIG. 3, in an embodiment, the camera module unit 210 may perform an upward moving operation and/or a rotating operation based on a user input (e.g., front photographing switching input or front photographing app execution). As the camera module unit 210 rotates, at least one camera included in the camera module unit 210 may be used as a front camera (e.g., selfie camera).

According to an embodiment of the disclosure, in a state 301, a camera included in the camera module unit 210 may face a rear surface (e.g., a first direction or x direction of FIG. 2A) of the electronic device 200. In this case, the camera included in the camera module unit 210 may be used as a rear camera. This state may be referred to as a first state.

According to an embodiment of the disclosure, in a state 302, the camera module unit 210, the rack gear 221, and the slide part 230 may perform an upward movement based on a user input. For example, the camera module unit 210, the rack gear 221, and the slide part 230 may move by a first length H1 in a third direction. This may be referred to as a first stroke. In the state 302, the rack gear 221 may be fixed by a cleek (e.g., the cleek 222). This state may be referred to as a second state.

According to an embodiment of the disclosure, in states 303 to 305, the camera module unit 210 may perform an upward movement and a rotational movement. For example, in the state 303 to 305, the rack gear 221 may be fixed by the cleek, and only the camera module unit 210 and the slide part 230 may move upward. The camera module unit 210 and the slide part 230 may move upward by the second length H2 in the third direction. This may be referred to as a second stroke. The pinion gear 211 may rotate in engagement with the rack gear 221. Accordingly, the camera module unit 210 may rotate. In the state 305, the camera included in the camera module unit 210 may face the front surface (e.g., a second direction or a -x direction of FIG. 2B) of the electronic device 200. In this case, the camera included in the camera module unit 210 may be used as a front camera. This state may be referred to as a third state.

In the state 305 according to an embodiment of the disclosure, a radiation path of a heat generated in the camera module unit 210 may include a path radiated from the camera module unit 210 itself to the air and a path conducted through the rotation cam 211b (see FIG. 7A), an extension portion 211a (see FIG. 7A) of a rotation shaft, and the pinion gear 211 (see FIG. 7A) and conducted toward the electronic device through the rack gear 221 to radiate a heat. In a state 306 according to an embodiment of the disclosure, an additional conduction path may be secured.

According to an embodiment of the disclosure, in the state 306, the slide part 230 may move upward to be in close contact with the camera housing 210a (see FIG. 2A) of the camera module unit 210. For example, in the state 306, the slide part 230 may move upward by a third length H3 in the third direction. This may be referred to as a third stroke. The third length H3 may be a gap between the camera housing 210a and the opening 231 (see FIG. 2A). In the disclosure, the camera housing 210a (see FIG. 2A) and the opening 231 (see FIG. 2A) are brought into contact to secure a path for heat dissipation by conduction, and the TIM 235 (see FIG. 2A) may be disposed in the inner surface of the opening 231 to improve heat conduction efficiency. This state may be referred to as a fourth state.

The pinion gear 211 according to various embodiments of the disclosure may rotate based on the length (or number of gears) of the rack gear 221. For example, an angle at which the pinion gear 211 rotates may vary according to the length (or number of gears) of the rack gear 221. Accordingly, according to the length (or number of gears) of the rack gear 221, the camera module unit 210 coupled to the pinion gear 211 may rotate by a predetermined angle. As an example, the length (or number of gears) of the rack gear 221 may be set so that the pinion gear 211 rotates 180 degrees. As various embodiments, the length (or number of gears) of the rack gear 221 may be set so that the pinion gear 211 rotates by 180 degrees or less (e.g., 0 to 180 degrees). Alternatively, the length (or number of gears) of the rack gear 221 may be set so that the pinion gear 211 rotates by 180 degrees or more (e.g., 280 to 300 degrees). When the pinion gear 211 rotates by 180 degrees or more, the camera module unit 210 may be set to an angle appropriate for photographing without rotating the electronic device 200 itself.

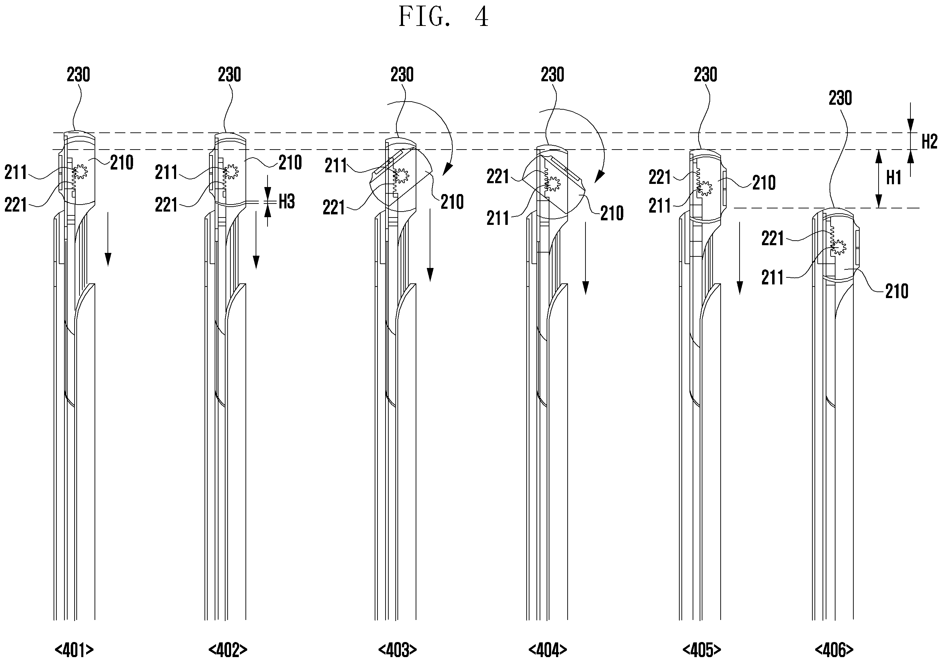

FIG. 4 is a side view illustrating an operation (e.g., movement in a -z direction of FIG. 2A) in which the camera module unit moves downward in a fourth direction according to an embodiment of the disclosure.

Referring to FIG. 4, the camera module unit 210 may perform a downward moving operation or a rotating operation in the fourth direction based on a user input (e.g., rear photographing switching input or photographing end input). As the camera module unit 210 rotates, at least one camera included in the camera module unit 210 may be used as a rear camera.

According to an embodiment of the disclosure, in a state 401, the camera included in the camera module unit 210 may face the front surface (e.g., second direction) of the electronic device 200. For example, the camera included in the camera module unit 210 may face the front surface of the electronic device 200 by a previously input user input (e.g., front photographing switching input or front photographing app execution). As various embodiments, the camera module unit 210 may face the front surface of the electronic device 200 at a specific angle according to a gear ratio between the pinion gear 211 and the rack gear 221. According to an embodiment of the disclosure, in the state 401 (e.g., fourth state), the slide part 230 may move downward by a third length H3 in the fourth direction. As the slide part 230 moves downward by the third length H3, the opening 231 and the camera module unit 210 are separated by the third length H3, so that a gap for rotating the camera module unit 210 may be secured. This state may be referred to as a third state.

According to an embodiment of the disclosure, in states 402 to 404, the camera module unit 210 may perform a downward movement and/or a rotational movement. For example, in the states 402 to 404, the rack gear 221 may maintain a fixed state by the cleek 222 (see FIG. 2A), and only the camera module unit 210 and the slide part 230 may move downward. The camera module unit 210 and the slide part 230 may move downward by a second length H2 in a fourth direction. The pinion gear 211 may rotate in engagement with the rack gear 221. Accordingly, the camera module unit 210 may rotate.

According to an embodiment of the disclosure, in a state 405, the camera included in the camera module unit 210 may face the rear surface (e.g., first direction) of the electronic device 200. This state may be referred to as a second state. For example, in the state 405, the camera module unit 210, the rack gear 221 and the slide part 230 may perform a downward movement together. In this case, the rack gear 221 may be released from the cleek 222. The camera module unit 210, the rack gear 221, and the slide part 230 may move by a first length H1 in the fourth direction. In a state 406, the camera module unit 210 may return to an original position (e.g., state 301, first state).

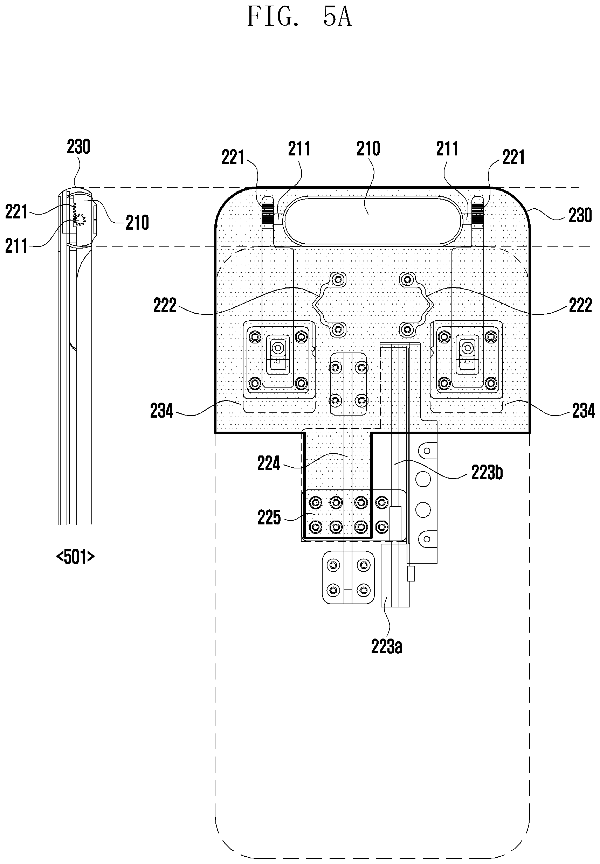

FIGS. 5A to 5F are perspective views illustrating an upward moving operation (e.g., movement in a z-direction of FIG. 2A) of the camera module unit according to an embodiment of the disclosure.

Referring to FIGS. 5A to 5F, in an embodiment, the camera module unit 210 may perform an upward moving operation and/or a rotating operation based on a user input (e.g., front photographing switching input, or front photographing app execution). As the camera module unit 210 rotates, at least one camera included in the camera module unit 210 may be used as a front camera (e.g., selfie camera).

According to an embodiment of the disclosure, in a state 501, the camera included in the camera module unit 210 may face the rear surface (e.g., x direction of FIG. 2A) of the electronic device 200. In this case, the camera included in the camera module unit 210 may be used as a rear camera. The moving member 225 may be positioned at a reference position (e.g., the lowest end of the guide frame 224).

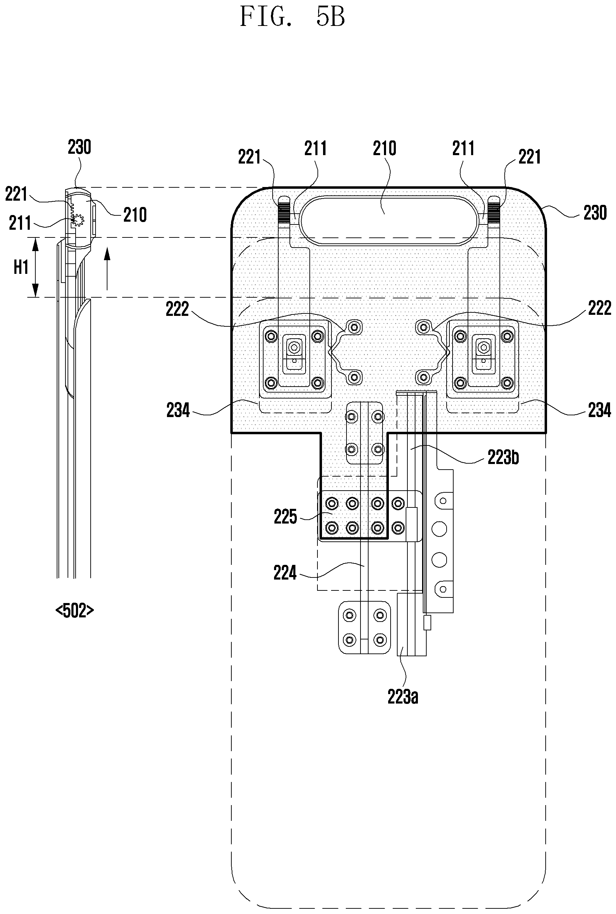

According to an embodiment of the disclosure, in a state 502, the camera module unit 210, the rack gear 221, and the slide part 230 may perform an upward movement in a third direction based on a user input. For example, the motor 223a may operate according to the control of the control circuit 226 (see FIG. 2A), and the rotation part 223b may rotate in a first rotational direction (e.g., clockwise) by the motor 223a. The moving member 225 may move upward according to a rotation of the rotation part 223b. The slide part 230 coupled to the moving member 225 may move upward, and the rack gear 221 and the camera module unit 210 connected to the slide part 230 may move upward together. The camera module unit 210, the rack gear 221, and the slide part 230 may move by a first length H1 (see FIG. 5B) in a third direction. In the state 502, the rack gear 221 may be fixed by the cleek 222.

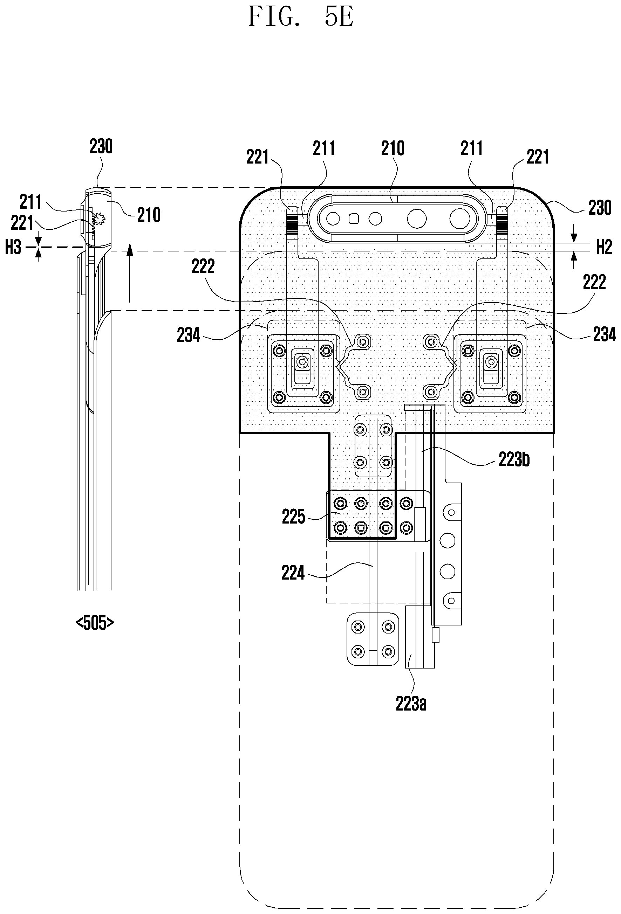

According to an embodiment of the disclosure, in states 503 to 505, the camera module unit 210 may perform an upward movement and/or a rotational movement. For example, in states 503 to 505, the rack gear 221 may be fixed by the cleek 222, and only the camera module unit 210 and the slide part 230 may move upward. The camera module unit 210 and the slide part 230 may move upward by a second length H2 (see FIG. 5E) in the third direction. The pinion gear 211 may rotate in engagement with the rack gear 221. Accordingly, the camera module unit 210 may rotate.

According to an embodiment of the disclosure, in a state 506, the slide part 230 may move upward in the third direction to be in close contact with the camera housing 210a (see FIG. 2A) of the camera module unit 210. For example, in the state 506, the slide part 230 may move upward by a third length H3 (see the state 505) in the third direction. The third length H3 may be a gap between the camera housing 210a and the opening 231 (see FIG. 2A). According to an embodiment of the disclosure, in the state 506, the camera included in the camera module unit 210 may face the front surface of the electronic device 200. For example, the moving member 225 may be positioned at the uppermost end of the guide frame 224. In this case, the camera included in the camera module unit 210 may be used as a front camera.

The pinion gear 211 according to various embodiments of the disclosure may rotate based on the length (or number of gears) of the rack gear 221. For example, an angle at which the pinion gear 211 rotates may vary according to the length (or number of gears) of the rack gear 221. Accordingly, according to the length (or number of gears) of the rack gear 221, the camera module unit 210 coupled to the pinion gear 211 may rotate by a predetermined angle. As an example, the length (or number of gears) of the rack gear 221 may be set so that the pinion gear 211 rotates 180 degrees. As various embodiments, the length (or number of gears) of the rack gear 221 may be set so that the pinion gear 211 rotates by 180 degrees or less (e.g., 0 to 180 degrees). Alternatively, the length (or number of gears) of the rack gear 221 may be set so that the pinion gear 211 rotates by 180 degrees or more (e.g., 280 to 300 degrees). When the pinion gear 211 rotates by 180 degrees or more, the camera module unit 210 may be set to an angle appropriate for photographing without rotating the electronic device itself.

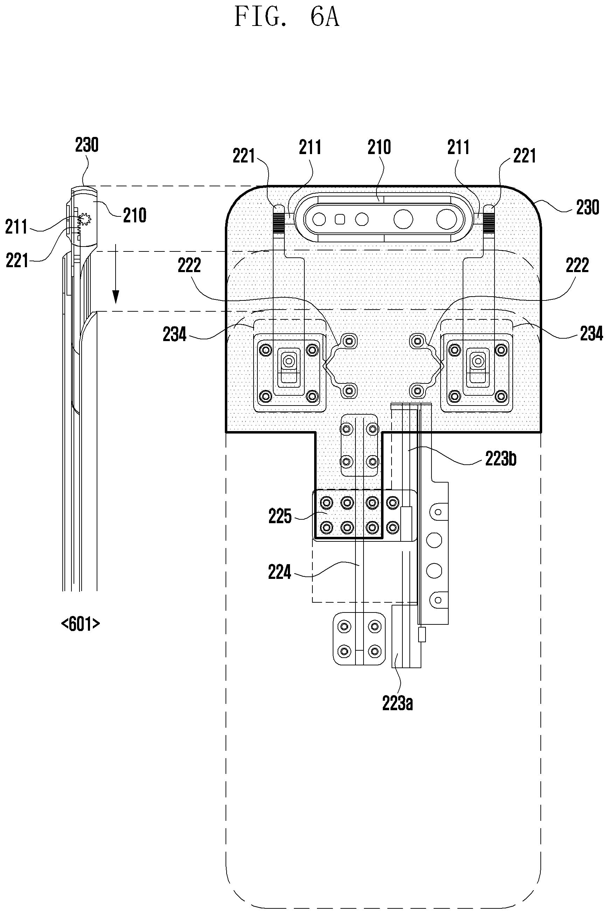

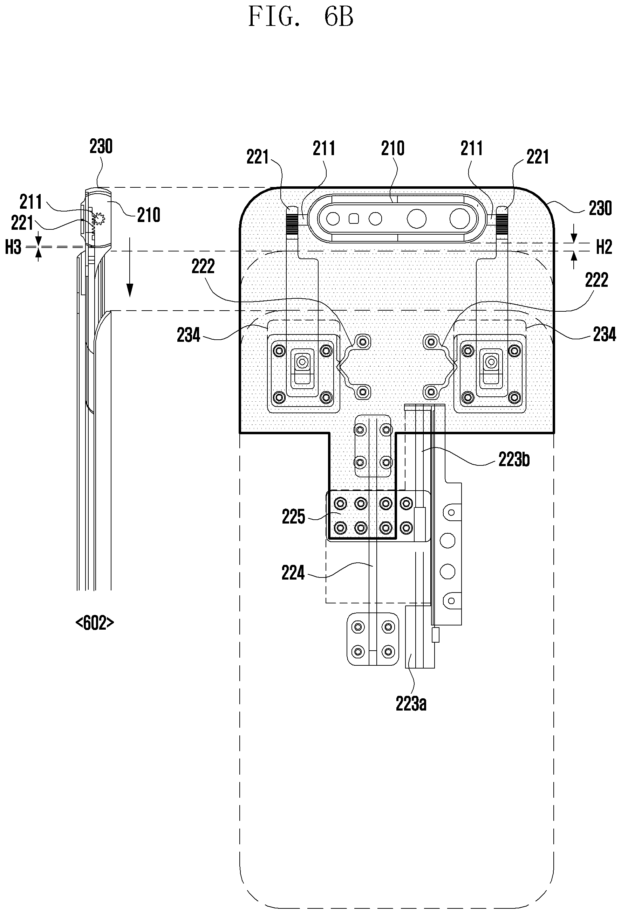

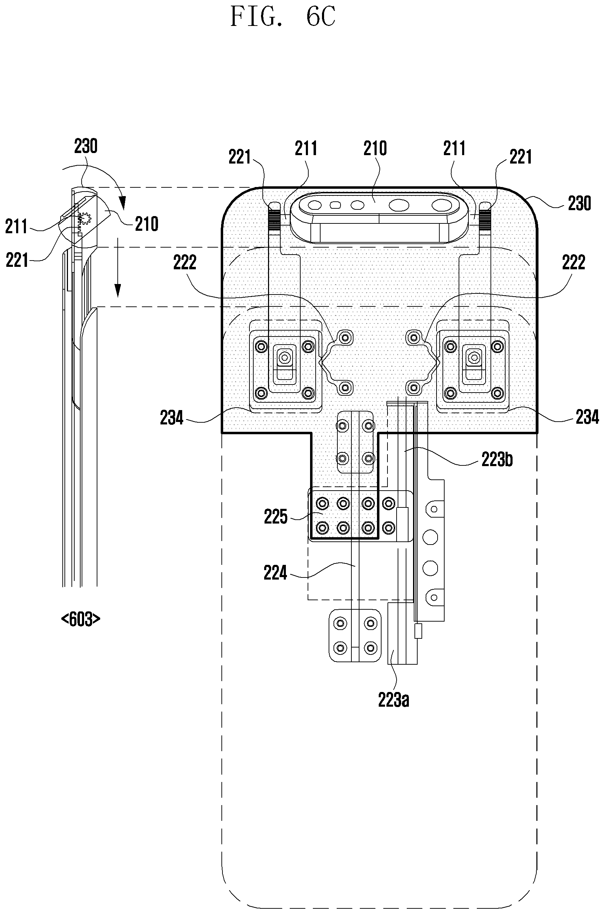

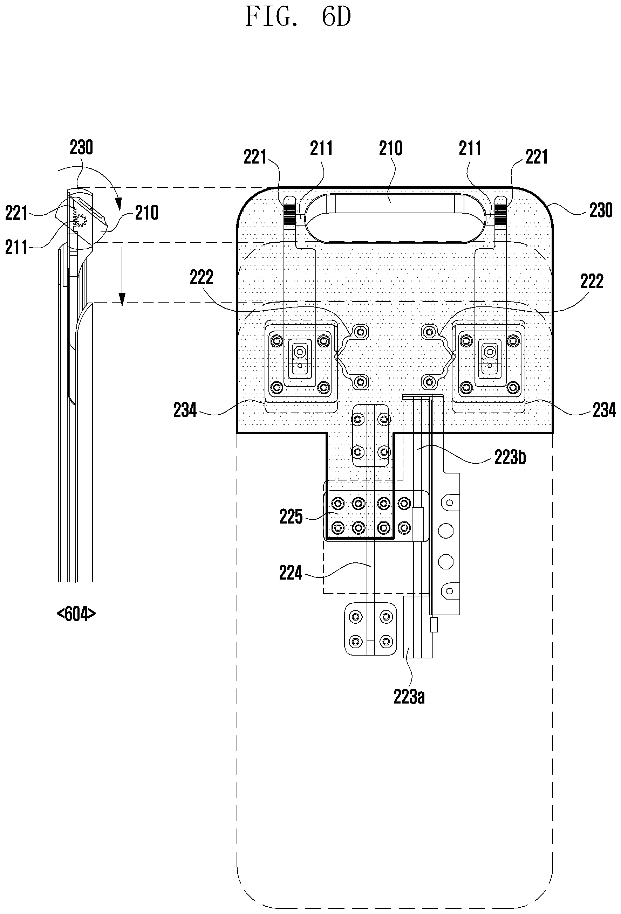

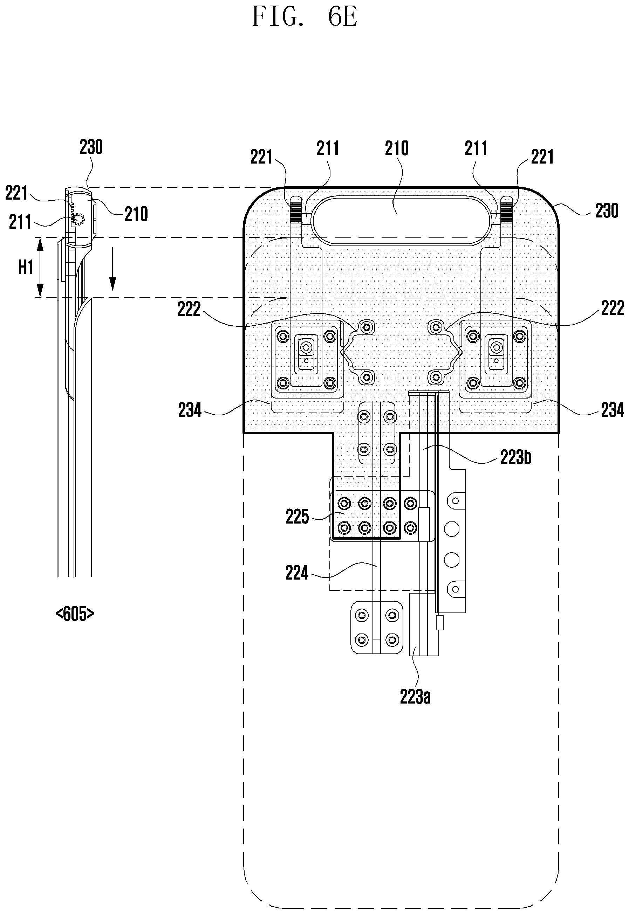

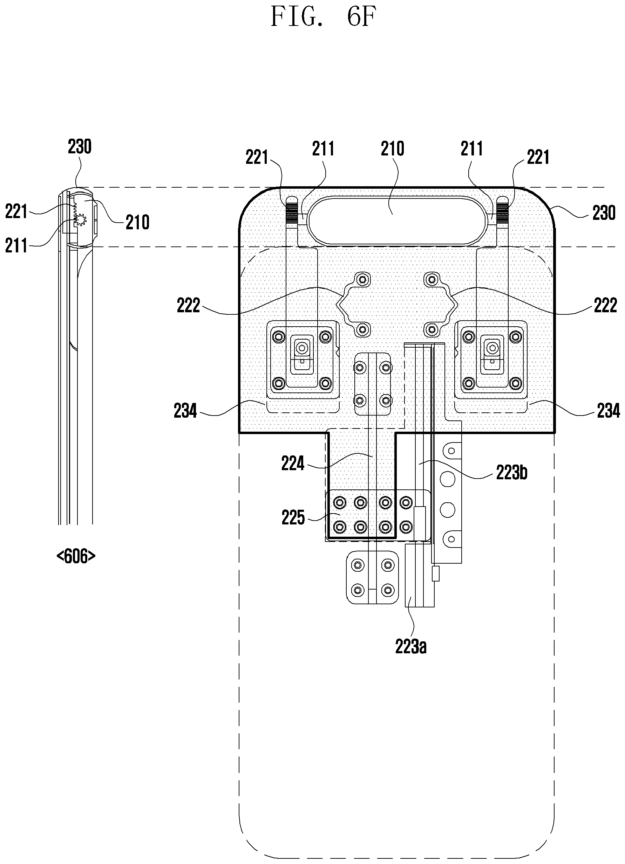

FIGS. 6A to 6F are perspective views illustrating a downward moving operation (e.g., movement in a -z direction of FIG. 2A) of the camera module unit according to an embodiment of the disclosure.

Referring to FIGS. 6A to 6F, in an embodiment, the camera module unit 210 may perform a downward moving operation and/or a rotating operation based on a user input (e.g., rear photographing switching input, photographing end input). As the camera module unit 210 rotates, at least one camera included in the camera module unit 210 may be used as a rear camera.

According to an embodiment of the disclosure, in a state 601, the camera included in the camera module unit 210 may face a front surface of the electronic device 200. For example, the camera included in the camera module unit 210 may face the front surface (e.g., -x direction of FIG. 2B) of the electronic device 200 by a previously input user input (e.g., front photographing switching input or front photographing app execution). The motor 223a may operate according to the control of the control circuit (e.g., the control circuit 226 of FIG. 2A), and the rotation part 223b may rotate by the motor 223a in a second rotational direction opposite to the first rotational direction. The moving member 225 may move downward according to a rotation of the rotation part 223b. According to an embodiment of the disclosure, in the state 601, the slide part 230 may move downward by a third length H3 (see a state 602) in the fourth direction to be separated from the opening 231, thereby securing a gap for rotating the camera module unit 210.

According to an embodiment of the disclosure, in the state 602, the slide part 230 coupled to the moving member 225 may move downward, and the camera module unit 210 connected to the slide part 230 may move downward in the fourth direction. The camera module unit 210 and the slide part 230 may move by a second length H2 in the fourth direction. In this case, the rack gear 221 may be fixed by the cleek 222 to not move downward.

According to an embodiment of the disclosure, in states 603 to 605, the camera module unit 210 may perform a downward movement and/or a rotational movement. For example, in the states 603 to 605, the rack gear 221 may maintain a fixed state by the cleek 222, and only the camera module unit 210 and the slide part 230 may move downward. The camera module unit 210 and the slide part 230 may move downward by a second length H2 (see the state 602) in the fourth direction. The pinion gear 211 may rotate in engagement with the rack gear 221. Accordingly, the camera module unit 210 may rotate.

According to an embodiment of the disclosure, in the state 605, the camera included in the camera module unit 210 may face the rear surface of the electronic device 200. For example, in the state 605, the camera module unit 210, the rack gear 221, and the slide part 230 may perform a downward movement together. In this case, the rack gear 221 may be released from the cleek 222. The camera module unit 210, the rack gear 221, and the slide part 230 may move by a first length H1 in the fourth direction. In a state 606, the camera module unit 210 may return to an original position (e.g., the state 501 of FIG. 5A). In the state 606, the moving member 225 may be positioned at the lowermost end of the guide frame 224.

FIG. 7A is a perspective view illustrating an example of a structure of a camera module unit according to an embodiment of the disclosure.

When describing a structure of the camera module unit according to an embodiment of the disclosure, at least one camera device 212, 213, and 216 (see FIG. 2A), the flash 214 (see FIG. 2A), or the sensor module 215 (see FIG. 2A) may be included within the camera housing (dotted line portion). The rotation cam 211b, the extension portion 211a of the rotation shaft, and the pinion gear 211 may be symmetrically disposed on the same rotation shaft at both sides of the camera housing. The rotation cam 211b, the extension portion 211a of the rotation shaft, and the pinion gear 211 according to various embodiments of the disclosure may be integrally formed with the camera housing 210a (see FIG. 2A).

The rotation cam 211b according to an embodiment of the disclosure may serve to switch the electronic device from the third state to the fourth state while serving to transfer a force received from a cam hole 228 of the push rod 227 to the camera module unit 210.

The camera module unit 210 according to an embodiment of the disclosure may include a flexible printed circuit board (FPCB) 217 and a connection terminal 218. For example, the camera module unit 210 may be connected to a printed circuit board inside the electronic device (e.g., the electronic device 200) through the FPCB 217. The connection terminal 218 may be connected to a corresponding terminal on a printed circuit board inside the electronic device.

The FPCB 217 according to an embodiment of the disclosure may be formed to have at least one curve. For example, the FPCB 217 may include a first portion extended in a fifth direction or a sixth direction (e.g., an axial direction of the pinion gear 211) from the camera module unit 210 and a second portion extended in the fourth direction from the first portion.

The FPCB 217 according to various embodiments of the disclosure may be configured to be wound around the extended portion 211a of the rotation shaft of the pinion gear 211 according to a rotation of the camera module unit 210. For example, a portion of the FPCB 217 may be disposed to penetrate the extended portion 211a of the rotation shaft of the pinion gear 211. Alternatively, a portion of the FPCB 217 may be disposed parallel to the extension portion 211a of the rotation shaft of the pinion gear 211.

The camera module unit 210 according to an embodiment of the disclosure may generate a heat in an operating process (e.g., image or video photographing). Such a heat may be radiated into the air, or may be conducted to peripheral structures and radiated, thereby being dissipated. Heat dissipation of the camera module unit may be important for securing operational reliability of the camera device.

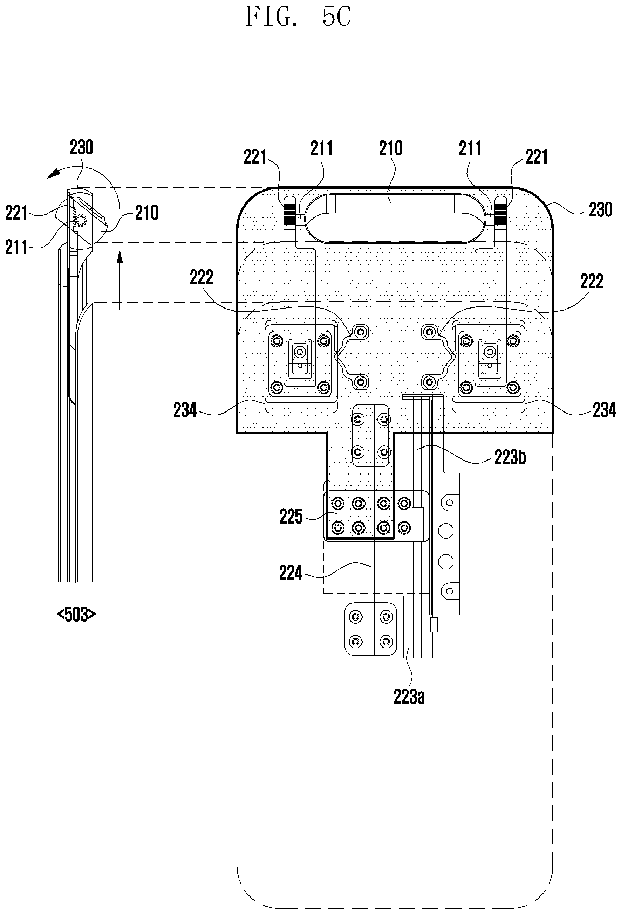

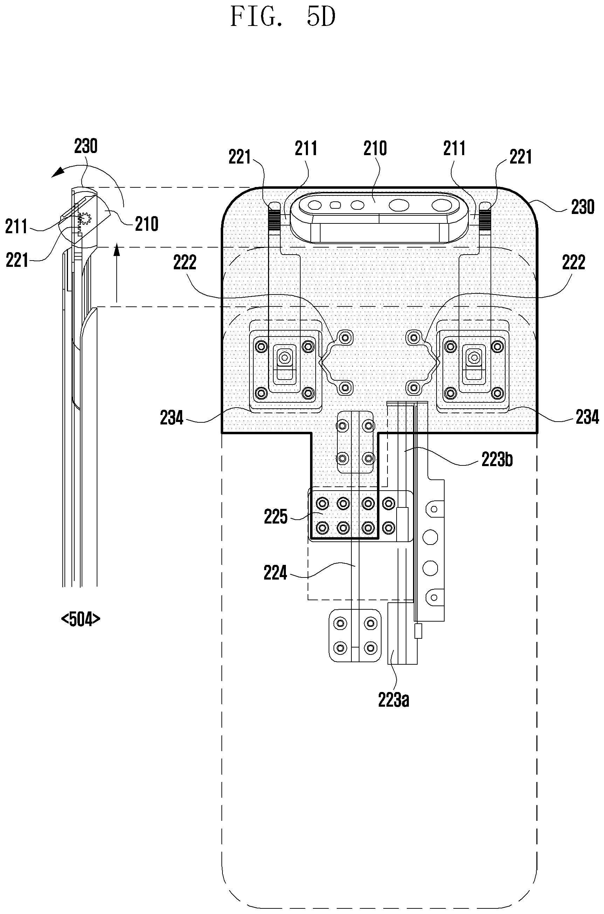

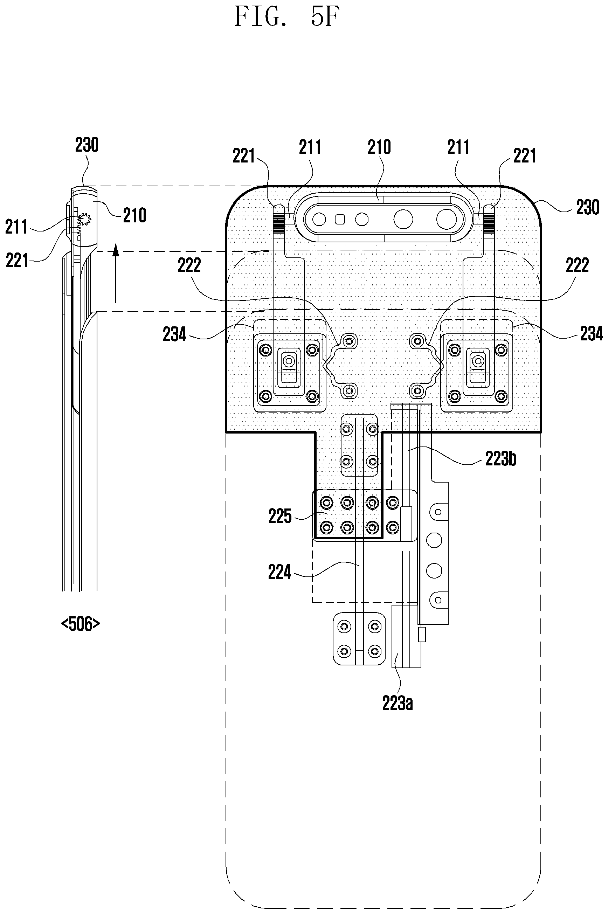

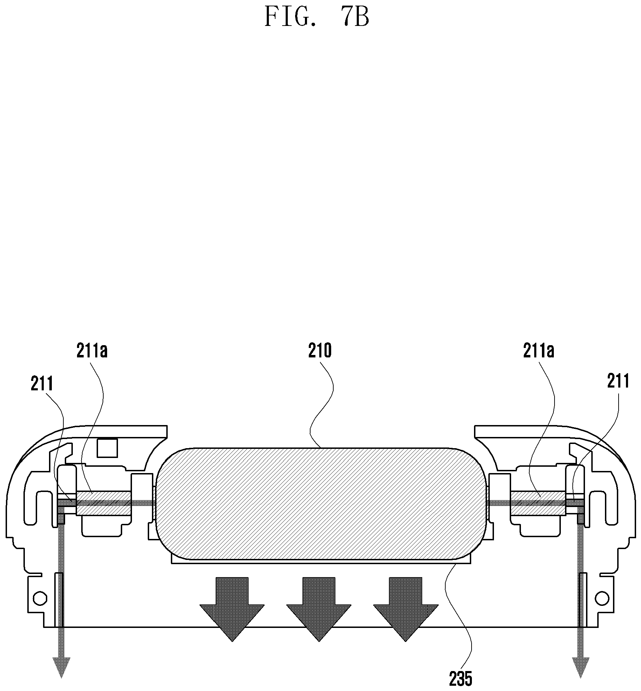

With reference to FIGS. 7A to 7B, a heat radiating method of the camera module unit 210 in the illustrated state may be performed by radiating a heat from the camera module unit 210 itself to the air, by conducting a heat through the rotation cam 211b, the extension portion 211a of the rotation shaft, and the pinion gear 211, or by conducting a heat to the electronic device side through the rack gear 221 (see FIG. 2A) to be radiated. In the disclosure, in addition to the above heat dissipation path, as illustrated in FIG. 7B (e.g., the state 306 of FIG. 3 or the state 506 of FIG. 5), by bringing the camera module unit 210 into contact with the TIM 235 of the opening 231 (see FIG. 2A), it is possible to additionally secure a path for heat dissipation by conduction. For example, a heat transferred through the TIM 235 may be radiated through a heat dissipation member (e.g., heat pipe or heat dissipation pad) inside the electronic device.

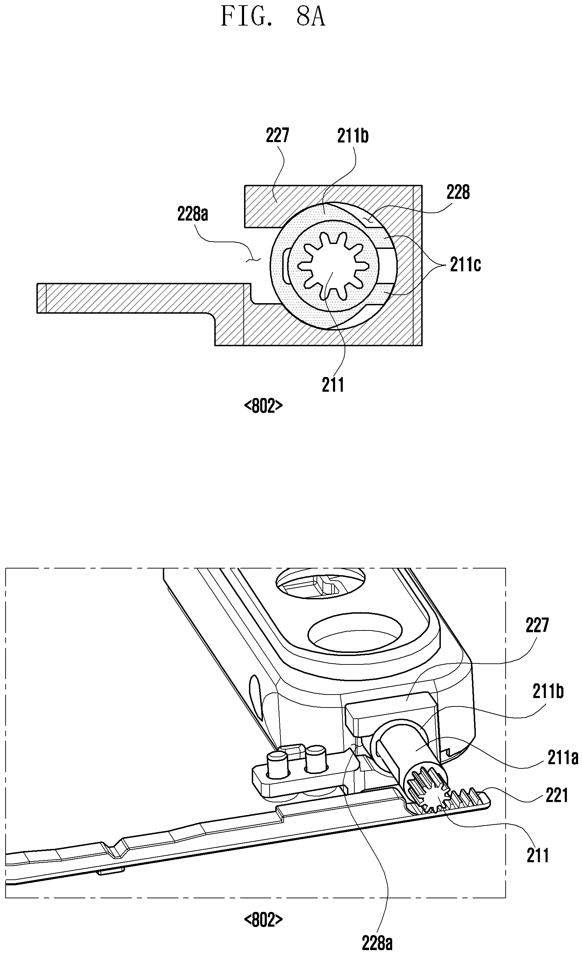

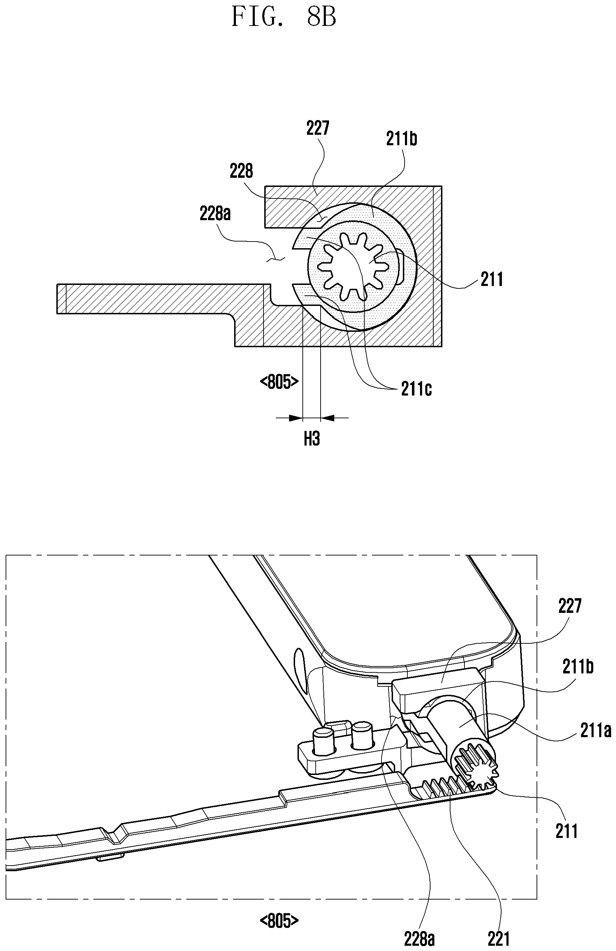

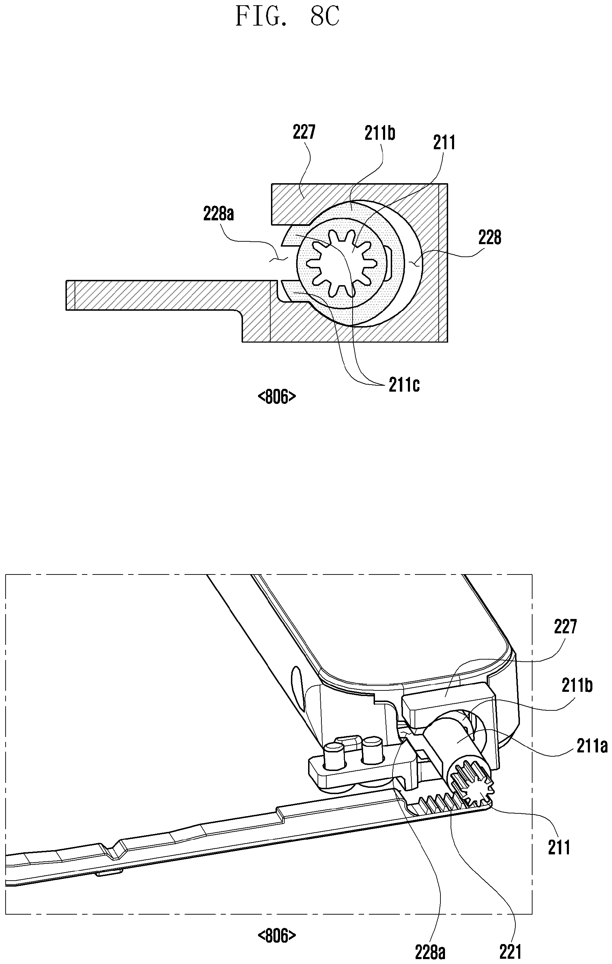

FIGS. 8A to 8C are diagrams illustrating a part of an upward moving operation of the camera module unit based on the operation relationship between the rotation cam 211b and the push rod 227 according to an embodiment of the disclosure, and are diagrams illustrating based on a structure that implements a close contact of the opening 231 (see FIG. 2A) and the camera module 210 (see FIG. 2A). For example, a state 802 of FIG. 8A may correspond to the state 302 of FIG. 3, a state 805 of FIG. 8B may correspond to the state 305 of FIG. 3, and a state 806 of FIG. 8C may correspond to the state 306 of FIG. 3.

The push rod 227 according to an embodiment of the disclosure may have one side fixed to the slide part 230 (see FIG. 2A), and the cam hole 228 formed in the other side. The push rod 227 may move together according to a movement of the slide part 230, and finally transfer a driving force of the motor 223a (see FIG. 2A) to the camera module unit 210. The cam hole 228 may have a circular shape, and have a form in which a groove 228a is formed toward one side end portion. A width of the groove 228a may correspond to a width of a protrusion 211c of the rotation cam 211b.

The rotation cam 211b according to an embodiment of the disclosure may be in contact with at least a portion of an inner circumferential surface of the cam hole 228 and have an oval shape rotating along the inner circumferential surface of the cam hole 228, and the protrusion 211b may be formed corresponding to the groove 228a of the cam hole 228a.

The state 802 of FIG. 8A may correspond to the state 302 of FIG. 3. In the state 302 of FIG. 3 based on the illustrated state of FIG. 8A, the protrusion 211c of the rotation cam 211b may face in a right direction and be in contact with the inner circumferential surface of the cam hole 228.

The state 805 of FIG. 8B may correspond to the state 305 of FIG. 3. The state 805 is a state in which the camera module unit 210 (see FIG. 2A) has completed a rotation of 180 degree toward the front surface, and the protrusion 211c of the rotation cam 211b may face in the left direction and be disposed to face the groove 228a of the cam hole 228. When describing an operation process, a movement of the slide part 230 according to progress from the state 302 of FIG. 3 to the state 305 of FIG. 3 may push the rotation cam 211b in a right direction through the push rod 227. In this case, the pinion gear 211 may rotate and move along the rack gear 221 to reach the state 305 of FIG. 3.

The state 806 of FIG. 8C may correspond to the state 306 of FIG. 3. FIG. 8C may illustrate a state in which the slide part 230 (see FIG. 2A) is further moved to the right by a third length H3 (see FIG. 8B) in the state 805. By inserting the protrusion 211c of the rotation cam 211b into the groove 228a of the cam hole 228, a gap between the opening 231 (see FIG. 2A) and the camera module unit 210 (see FIG. 2A) may be removed and the opening 231 (see FIG. 2A) and the camera module unit 210 (see FIG. 2A) contact each other. According to an embodiment, a protrusion degree of the protrusion 211c of the rotation cam 211b may correspond to the size of the gap between the opening 231 and the camera module unit 210.

An electronic device according to an embodiment of the disclosure includes a housing, an opening 231 exposed to the outside in a first direction, a slide part 230 sliding with respect to the housing, a display 241 facing in a second direction and exposed through a portion of the housing, and a camera module unit 210 disposed in the opening 231, rotating within the opening 231, and rotating in association with the operation of the slide part 230, wherein the slide part 230 includes a first state in which the camera module unit 210 is positioned to overlap the display 241, a second state that moves by a first length H1 in a third direction perpendicular to the first direction and the second direction by a first stroke in the first state, a third state that moves by a second length H2 in the same direction as that of the first stroke by a second stroke in the second state, and a fourth state that moves by a third length H3 in the same direction by a third stroke in the third state, wherein the camera module unit 210 may face in the first direction in the first state and the second state, face in the second direction in the third state and the fourth state, rotate from the first direction to the second direction by the second stroke upon switching from the second state to the third state, and be set so that the camera module unit 210 contacts an inner surface of the opening 231 by the third stroke upon switching from the third state to the fourth state.

The electronic device may further include a slide operation controller 220 that provides a driving force to an operation to the first state to the fourth state of the slide part 230.

The slide operation controller 220 may include a motor 223a for providing a driving force, a moving member 225 for coupling the motor 223a and the slide part 230 and transferring a driving force of the motor 223a to the slide part 230, and a rack gear 221 disposed in the first stroke direction, moving together with the slide part 230 according to the first stroke, and having irregularities formed in one side end portion thereof, and the camera module unit 210 may include a camera housing 210a including at least one camera device and a pinion gear 211 formed along a rotation shaft of the camera housing 210a and engaging with the rack gear 221.

The first stroke may be operated before the second stroke to the third stroke.

The second stroke to the third stroke may be continuously operated.

The third length H3 may correspond to a gap between one side of the camera housing 210a and an inner surface of one side of the opening 231.

The slide part 230 may further include a push rod 227 whose one side is fixed to the slide part 230 to push the camera module unit 210 by a second length H2 according to a movement of the slide part 230 in the second stroke process, and the camera module unit 210 may further include a rotation cam 211b protruded from the camera housing 210a to be formed in a shaft between the pinion gears 211, and coming into contact with the push rod 227 to receive a force and rotating within the rotation hole of the slide.

When the push rod 227 applies a force to the rotation cam 211b, the pinion gear 211 may rotate on the rack gear 221 to rotate the camera module unit 210.

The push rod 227 may include a cam hole 228 formed in a circular shape at the other side end portion and in which a groove 228a is formed toward a direction of one side end portion, and the rotation cam 211b may have an elliptical shape that rotates in contact with at least a portion of an inner circumferential surface of the cam hole 228, and a protrusion 211c may be formed to correspond to the groove 228a of the push rod 227.

The fourth state may be implemented by inserting the protrusion 211c of the rotation cam 211b into the groove 228a of the push rod 227.

A thermal interface material (TIM) 235 may be disposed in a portion contacting the camera module unit 210 in an inner circumferential surface of the opening 231 of the slide part 230.

The first direction and the second direction may be opposite to each other.

A method of operating an electronic device according to an embodiment of the disclosure including a housing, an opening 231 formed in a first direction, a display 241 facing in a second direction, a slide part 230 sliding with respect to the housing, and a camera module unit 210 disposed in the opening 231 and rotating in association with the operation of the slide part 230 in the opening 231 includes moving, by the slide part 230, by a first length H1 in a third direction perpendicular to the first direction and the second direction by a first stroke in a state in which the camera module unit 210 is overlapped with the display 241 when a user input is received, moving by a second length H2 in the same direction as that of the first stroke by a second stroke, and moving by a third length H3 in the same direction as that of the second stroke by a third stroke, wherein the camera module unit 210 may contact an inner surface of the opening 231 by the operation of moving by the third length H3.

The camera module unit 210 may face in the first direction in an operation of moving by the first length H1, rotate from the first direction toward the second direction in an operation of moving by the second length H2, and face in the second direction in an operation of moving by the third length H3.

The electronic device may further include a slide operation controller 220 that provides a driving force to operations of the first stroke to the third stroke of the slide part 230.

The first stroke may be operated before the second stroke to the third stroke.

The second stroke to the third stroke may be continuously operated.

The third length H3 may correspond to a gap between one side of the camera module unit 210 and an inner surface of one side of the opening 231.

A thermal interface material (TIM) 235 may be disposed in a portion contacting the camera module unit 210 in an inner circumferential surface of the opening 231 of the slide part 230.

The first direction and the second direction may be opposite to each other.

An electronic device according to another embodiment of the disclosure includes a housing, an opening 231 exposed to the outside in a first direction, a slide part 230 sliding with respect to the housing, a display 241 facing in a second direction, and built into the housing, and exposed through a part of the housing, a camera module unit 210 disposed in the opening 231, rotating within the opening 231, and rotating in association with the operation of the slide part 230, and a thermal interface material (TIM) 235 disposed in at least a portion of an inner circumferential surface of the opening 231 of the slide part 230, wherein the slide part 230 includes a first state in which the camera module unit 210 is positioned to overlap the display 241, a second state that moves by a first length H1 in a third direction perpendicular to the first direction and the second direction by a first stroke in the first state, a third state that moves by a second length H2 in the same direction as that of the first stroke by the second stroke in the second state, and a fourth state that moves by a third length H3 in the same direction by the third stroke in the third state, wherein the camera module unit 210 is set so that the camera module unit 210 contacts an inner surface of the opening 231 by the third stroke upon switching from the third state to the fourth state.

The embodiments of the disclosure disclosed in this specification and drawings only present a specific example in order to easily describe the technical contents according to an embodiment of the disclosure and to help an understanding of the embodiments of the disclosure, and they do not intend to limit the scope of the embodiments of the disclosure. Accordingly, all changes or modifications derived from the technical idea of various embodiments of the disclosure in addition to the embodiments described herein should be construed as being included in the scope of various embodiments of the disclosure.

## Claims

1. An electronic device, comprising:
a housing;
a slide part including an opening exposed to the outside in a first direction and configured to slide with respect to the housing;
a display configured to face in a second direction and exposed through a portion of the housing; and
a camera module unit disposed in the opening and configured to rotate within the opening and to rotate in association with an operation of the slide part,
wherein the slide part comprises:
a first state in which the camera module unit is positioned to overlap the display;
a second state that moves by a first length in a third direction perpendicular to the first direction and the second direction by a first stroke in the first state;
a third state that moves by a second length in the same direction as that of the first stroke by a second stroke in the second state; and
a fourth state that moves by a third length in the same direction by a third stroke in the third state, and
wherein the camera module unit is configured to face in the first direction in the first state and the second state, to face in the second direction in the third state and the fourth state, to rotate from the first direction toward the second direction by the second stroke upon switching from the second state to the third state, and to be set so that the camera module unit contacts an inner surface of the opening by the third stroke upon switching from the third state to the fourth state.

2. The electronic device of claim 1, further comprising a slide operation controller configured to provide a driving force to an operation to the first state to the fourth state of the slide part.

3. The electronic device of claim 2, wherein the slide operation controller comprises:
a motor configured to provide a driving force;
a moving member coupled to the motor and the slide part and configured to transfer a driving force of the motor to the slide part; and
a rack gear disposed in the first stroke direction, configured to move together with the slide part according to the first stroke, and having irregularities formed at one side end portion thereof, and
the camera module unit comprises:
a camera housing including at least one camera device; and
a pinion gear formed along a rotation shaft of the camera housing and configured to engage with the rack gear.

4. The electronic device of claim 3, wherein the first stroke is operated before the second stroke to the third stroke.

5. The electronic device of claim 4, wherein the second stroke to the third stroke are continuously operated.

6. The electronic device of claim 3, wherein the third length corresponds to a gap between one side of the camera housing and an inner surface of one side of the opening.

7. The electronic device of claim 3, wherein the slide part further comprises a push rod having one side fixed to the slide part and configured to push the camera module unit by a second length according to a movement of the slide part in a second stroke process, and
the camera module unit further comprises a rotation cam protruded from the camera housing, formed in a shaft between the pinion gears, and configured to receive a force in contact with the push rod to rotate within a rotation hole of the slide.

8. The electronic device of claim 7, wherein the pinion gear is configured to rotate on the rack gear to rotate the camera module unit when the push rod applies a force to the rotation cam.

9. The electronic device of claim 7, wherein the push rod comprises a cam hole formed in a circular shape at the other side end portion and having a groove toward a direction of one side end portion, and
the rotation cam has an elliptical shape rotating in contact with at least a portion of an inner circumferential surface of the cam hole, and has a protrusion corresponding to the groove of the push rod.

10. The electronic device of claim 9, wherein the fourth state is implemented by inserting the protrusion of the rotation cam into the groove of the push rod.

11. The electronic device of claim 9, wherein a thermal interface material (TIM) is disposed in a portion in contact with the camera module unit in an inner circumferential surface of the opening of the slide part.

12. The electronic device of claim 1, wherein the first direction and the second direction are opposite to each other.

13. A method of operating an electronic device including a housing, an opening formed in the first direction, a display configured to face in a second direction, a slide part configured to slide with respect to the housing, and a camera module unit disposed in the opening and configured to rotate in association with an operation of the slide part in the opening, the method comprises:
moving, by the slide part, by a first length in a third direction perpendicular to the first direction and the second direction by a first stroke in a state in which the camera module unit overlaps the display when a user input is received;
moving by a second length in the same direction as that of the first stroke by a second stroke; and
moving by a third length in the same direction as that of the second stroke by a third stroke,
wherein the camera module unit contacts an inner surface of the opening by moving by the third length.

14. The method of claim 13, wherein the camera module unit is configured to face in the first direction in moving by the first length, to rotate from the first direction toward the second direction in moving by the second length, and to face in the second direction in moving by the third length.

15. The method of claim 13, wherein the first stroke is operated before the second stroke to the third stroke.
